# EUROPÄISCHE PATENTANMELDUNG

(11) **EP 4 848 028 A1**
(43) Veröffentlichungstag der Anmeldung: **02.12.2026**
(21) Anmeldenummer: 26178234.6
(22) Anmeldetag: 12.05.2026
(51) Int. Cl.: G05G 9/047, A63F 13/24, A63F 13/803, F41A 27/28, B60K 26/02

(54) **EINGABEGERÄT NACH ART EINES GAMEPADS, INSBESONDERE ZUR NUTZUNG IN EINEM MILITÄRFAHRZEUG, SOWIE MILITÄRFAHRZEUG**

(30) Priorität: 27.05.2025 DE 102025120731
(71) Anmelder: Rheinmetall Air Defence AG, 8050 Zürich (CH)
(72) Erfinder: Kirchen, Paulo, 7530 Zernez (CH); Bernhard, Thomas, 8050 Zürich (CH); Dysli, David, 8400 Wintherthur (CH); Kuster, Jon, 8050 Zürich (CH)
(74) Vertreter: Kirschner, Sebastian

(57) **Zusammenfassung**

Die Erfindung betrifft ein Eingabegerät (12) nach Art eines Gamepads, insbesondere zur Nutzung in einem Militärfahrzeug (48), aufweisend:
- ein Gehäuse (16);
- mehrere Befehlsgeber, die an einer Oberseite des Gehäuses (16) angeordnet sind;
- einen ersten Handgriff (28), der an einer ersten Seitenwand des Gehäuses (16) befestigt ist;
- einen zweiten Handgriff (30), der an einer zweiten, der ersten Seitenwand gegenüberliegenden Seitenwand des Gehäuses (16) befestigt ist.

Um bei einem solchen Eingabegerät (12) zu verhindern, dass es unkontrolliert im Innenraum des Fahrzeugs herumfliegt, ist vorgesehen, dass:
- ein erstes Verbindungselement (40) an einer Bodenwand (38) oder Rückwand (44) des Gehäuses (16) befestigt ist.

Die Erfindung betrifft zudem ein Militärfahrzeug (48), aufweisend:
- ein Eingabegerät (12), aufweisend:
- ein Gehäuse (16);
- mehrere Befehlsgeber, die an einer Oberseite des Gehäuses (16) angeordnet sind;
- einen ersten Handgriff (28), der an einer ersten Seitenwand des Gehäuses (16) befestigt ist;

- einen zweiten Handgriff (30), der an einer zweiten, der ersten Seitenwand gegenüberliegenden Seitenwand des Gehäuses (16) befestigt ist; und
- ein Chassis (50), eine Karosserie, eine Kabine oder einen Rumpf;
wobei
- das Eingabegerät (12) an seiner Bodenwand (38) oder Rückwand (44) durch Formschluss und/oder Kraftschluss und/oder Stoffschluss mit dem Chassis (50), der Karosserie, der Kabine oder dem Rumpf fest verbunden ist.

## Beschreibung

Die Erfindung betrifft ein Eingabegerät nach Art eines Gamepads, insbesondere zur Nutzung in einem Militärfahrzeug, sowie ein Militärfahrzeug.

Mensch-Maschine-Schnittstellen, sogenannte HMIs, spielen im militärischen Bereich eine zentrale Rolle, um z.B. Endeffektoren wie Panzertürme, Waffen, Kameras, Roboter oder alle Arten von unbemannten Fahrzeugen zu steuern. Häufig wird zwischen stationären und mobilen HMIs unterschieden: Stationäre HMIs sind z.B. für den Kommandanten eines militärischen Gerätes, z.B. eines Panzers, zur Bedienung der Sichtsysteme vorgesehen und direkt im Panzer eingebaut. Mobile militärische HMIs, bieten Lösungen für den mobilen Einsatz, z.B. um als Soldat im Feld Drohnen auch unter schwierigen Bedingungen steuern zu können. Ein bekannter Nachteil solcher Systeme ist, dass oft viel Übung erforderlich ist, um die HMI effizient mit einem Eingabegerät bedienen zu können. Militärische Eingabegeräte unterscheiden sich oft stark von Alltagsgegenständen und sind daher nicht intuitiv bedienbar, was eine lange Einarbeitungszeit erfordert. Die militärischen Anforderungen an Schock, Staub, Wasser, Temperaturbereich, Ablesbarkeit, Bedienbarkeit mit Handschuhen führen oft zu sehr sperrigen und wenig bedienerfreundlichen Systemen. Zudem besteht bei nicht intuitiv bedienbaren Systemen die Gefahr von Fehlbedienungen, was sich gerade im militärischen Alltag als fatal erweisen kann. Um diesen Herausforderungen gerecht zu werden, wurden verschiedene militärische Eingabegeräte entwickelt, die den militärischen Anforderungen entsprechen und dennoch eine intuitive Bedienung ermöglichen.

US 11 103 796 B1 offenbart eine modulare Sicherheitshalterung, die ein Gamepad umschließen kann und ein Sicherungsseil aufweist, das in der Lage ist, das Gamepad vor Diebstahl zu schützen und gegen Herunterfallen zu sichern. Der Nachteil dieser Halterung besteht darin, dass das Gamepad durch die Umhüllung an Funktionalität verliert, insbesondere weil die Knöpfe mit den Fingern schwerer zu erreichen sind, und dass die Verwendung eines Seils zur Sicherheitsverbindung für militärische Anwendungen, insbesondere in einem Fahrzeug, nicht geeignet ist.

SCIP ENGINEERING, LLC aus Esperanza, USA bietet unter der URL www.scip-engineering.com ein Handbediengerät mit der Bezeichnung PCU-L an, dessen Gehäuse aus Aluminiumguss besteht und in der Form bekannter Gamepads gestaltet ist. Die Knöpfe des Handbediengerätes sind besonders intuitiv, da sie seit Jahren bei Konsolenspiele als Eingabegeräte verwendet werden und ein bekanntes taktiles Gefühl vermitteln. Das Handbediengerät verfügt über verschiedene Tasten, die alle leicht mit den Fingern zu erreichen sind. Auch während der Bedienung wird das Eingabegerät in der Hand gehalten. Um das System ergonomisch zu gestalten, sind die Griffe so abgewinkelt, dass sie der natürlichen Armstellung beim Halten entsprechen.

Der Nachteil dieses bekannten Eingabegeräts von SCIP ENGINEERING, LLC liegt darin, dass es relativ schwer ist. Die robuste Ausführung dient insbesondere dem Schutz beim Herunterfallen des Eingabegeräts und der Betriebssicherheit im mobilen Einsatz. Wenn es in einem Fahrzeug, wie beispielsweise einem Militärfahrzeug verwendet wird, so besteht die Gefahr, dass der Nutzer bei starken, unerwarteten Bewegungen, beispielsweise bei schneller Fahrt eines Panzers durch unebenes Gelände oder eines Festrumpfschlauchboots durch hohen Seegang, das Eingabegerät unbeabsichtigt loslässt, um sich selbst festzuhalten, und dieses dann unkontrolliert im Innenraum herumfliegt und für Verletzungen und Beschädigungen sorgt.

Der Erfindung liegt die Aufgabe zugrunde, die beschriebenen Nachteile zu beheben.

Diese Aufgabe wird durch die Gegenstände der unabhängigen Ansprüche gelöst. Vorteilhafte Ausführungsformen der Erfindung sind in den abhängigen Ansprüchen beschrieben.

Die Erfindung schlägt gemäß einem ersten Aspekt ein Eingabegerät nach Art eines Gamepads, insbesondere zur Nutzung in einem Militärfahrzeug, vor, aufweisend:
- ein Gehäuse;
- mehrere Befehlsgeber, die an einer Oberseite des Gehäuses angeordnet sind;
- einen ersten Handgriff, der an einer ersten Seitenwand des Gehäuses befestigt ist;
- einen zweiten Handgriff, der an einer zweiten, der ersten Seitenwand gegenüberliegenden Seitenwand des Gehäuses befestigt ist;
wobei
- ein erstes Verbindungselement an einer Bodenwand oder Rückwand des Gehäuses befestigt ist.

Die Erfindung ermöglicht es, das Eingabegerät fest mit einem Fahrzeug, insbesondere einem Militärfahrzeug zu verbinden, beispielsweise mit einem an dem Fahrzeug befestigten Sitz oder mit einem Chassis oder einer Karosserie des Fahrzeugs. Hierdurch wird ein unkontrolliertes Herumfliegen des Eingabegeräts vermieden. Außerdem kann sich der Nutzer an den Handgriffen festhalten und abstützen und gleichzeitig das Eingabegerät weiterhin bedienen.

Das Gehäuse kann nach Bedarf auf beliebige Weise ausgebildet sein, beispielsweise derart, dass es zumindest teilweise aus oder unter Verwendung von Aluminium oder einer Aluminiumlegierung und insbesondere durch Aluminiumgießen, aus oder unter Verwendung von Gusseisen und/oder aus oder unter Verwendung eines faserverstärkten Kunststoffs hergestellt ist.

Das Eingabegerät kann nach Bedarf auf beliebige Weise ausgebildet sein, beispielsweise derart, dass es kein zusätzliches oder wenigstens ein zusätzliches erstes Verbindungselement aufweist. Jedes Verbindungselement kann nach Bedarf auf beliebige Weise ausgebildet sein, beispielsweise als Schraube, Gewindebolzen, Mutter oder Gewindehülse und/oder derart, dass es aus oder unter Verwendung von Stahl hergestellt ist.

In einer beispielhaften Ausführungsform ist bestimmt, dass mindestens eines der ersten Verbindungselemente ein erstes Schraubelement ist und ein Außengewinde oder Innengewinde aufweist. Ein Schraubelement mit Außengewinde kann beispielsweise eine Schraube oder ein Gewindebolzen sein, und ein Schraubelement mit Innengewinde kann beispielsweise eine Mutter oder eine Gewindehülse sein.

In einer beispielhaften Ausführungsform ist bestimmt, dass
- eine Versteifungsplatte an der Bodenwand oder Rückwand befestigt oder in die Bodenwand oder Rückwand eingelassen ist;
- jedes erste Verbindungselement an der Versteifungsplatte befestigt ist.

Die Versteifungsplatte kann nach Bedarf auf beliebige Weise ausgebildet sein, beispielsweise derart, dass sie aus oder unter Verwendung von Stahl hergestellt ist. Jedes erste Verbindungselement kann an die Versteifungsplatte geschweißt sein.

In einer beispielhaften Ausführungsform ist bestimmt, dass eine Traverse mithilfe eines zweiten Verbindungselements, das an dem ersten Verbindungselement kraftschlüssig und/oder formschlüssig angreift, an dem Gehäuse befestigt ist. Vorzugsweise ist jedem ersten Verbindungselement ein komplementäres zweites Verbindungselement zugeordnet. Falls ein erstes Verbindungselement beispielsweise eine Schraube oder ein Gewindebolzen ist, dann kann das jeweilige zweite Verbindungselement eine Mutter oder eine Gewindehülse sein, und umgekehrt. Die Traverse kann fest mit dem Fahrzeug verbunden sein, beispielsweise mit einem an dem Fahrzeug befestigten Sitz oder mit einem Chassis oder einer Karosserie des Fahrzeugs.

In einer beispielhaften Ausführungsform ist bestimmt, dass
- die Traverse einen nahen und einen fernen Endabschnitt aufweist und mit dem nahen Endabschnitt an dem Gehäuse befestigt ist;
- der ferne Endabschnitt über mindestens ein feststellbares Gelenk mit dem nahen Endabschnitt verbunden ist.

Jedes Gelenk kann nach Bedarf auf beliebige Weise ausgebildet sein, beispielsweise derart, dass es mindestens ein Schubgelenk, Drehgelenk, Schraubgelenk und/oder Kugelgelenk aufweist.

In einer beispielhaften Ausführungsform ist bestimmt, dass das Gelenk eine Längsverschiebung und/oder eine Drehung des nahen Endabschnitts und somit des an ihm befestigten Gehäuses relativ zu dem fernen Endabschnitt ermöglicht.

In einer beispielhaften Ausführungsform ist bestimmt, dass ein erster Totmannschalter an dem ersten Handgriff und ein zweiter Totmannschalter an dem zweiten Handgriff angeordnet ist. Bei militärischen Eingabegeräts ist es besonders wichtig, dass sie im Betrieb größtmögliche Sicherheit gegen Fehlfunktionen bieten. Eine Fehlbedienung durch einen falschen Tastendruck kann fatale Folgen haben, wie beispielsweise der unbeabsichtigte Abschuss einer Rakete oder sonstiger Waffe. Aus diesem Grund werden mehrstufige Sicherheitssysteme mit Totmannschaltern in das Eingabegerät integriert. Totmannschalter werden insbesondere bei Feuerbefehlen für Waffen eingesetzt. Totmannschalter lösen beispielsweise beim Loslassen aus, um dann die Waffe zu verriegeln beziehungsweise zu sichern oder zum Wiedereinschalten einen zusätzlichen Schaltvorgang anzufordern. Vorzugsweise sind die beiden Totmannschalter zwei seitlich an den Handgriffen angebrachte Flächenschalter, die beim normalen Umgreifen der Handgriffe mit beiden Händen automatisch betätigt werden. Nur wenn beide Totmannschalter gleichzeitig mit einer vorbestimmten Kraft von beispielsweise 4 N gedrückt werden, kann der kritische Befehl oder das Signal zum Abfeuern der Waffe gegeben werden.

In einer beispielhaften Ausführungsform ist bestimmt, dass jeder Handgriff eine raue oder strukturierte Oberfläche aufweist.

In einer beispielhaften Ausführungsform ist bestimmt, dass die raue oder strukturierte Oberfläche durch eine Pulverbeschichtung erzeugt wird.

In einer beispielhaften Ausführungsform ist bestimmt, dass
- einer der Befehlsgeber eine Schusstaste ist, mit der eine Waffe abgefeuert werden kann;
- eine Klappe beweglich an dem Gehäuse gelagert ist und eine Abdeckposition und eine Freigabeposition einnehmen kann;
- die Klappe in die Abdeckposition vorgespannt ist, in der sie die Schusstaste so abdeckt, dass diese nicht betätigt werden kann;
- die Klappe in der Freigabeposition die Schusstaste so freigibt, dass diese betätigt werden kann.

Die Klappe muss bevorzugt erst geöffnet werden, bevor die Schusstaste gedrückt werden kann.

Die Erfindung schlägt gemäß einem zweiten Aspekt ein Militärfahrzeug vor, aufweisend:
- ein Eingabegerät aufweisend:
   - ein Gehäuse;
   - mehrere Befehlsgeber, die an einer Oberseite des Gehäuses angeordnet sind;
   - einen ersten Handgriff, der an einer ersten Seitenwand des Gehäuses befestigt ist;
- einen zweiten Handgriff, der an einer zweiten, der ersten Seitenwand gegenüberliegenden Seitenwand des Gehäuses befestigt ist; und
- ein Chassis, eine Karosserie, eine Kabine oder einen Rumpf;
wobei
- das Eingabegerät an seiner Bodenwand oder Rückwand durch Formschluss und/oder Kraftschluss und/oder Stoffschluss mit dem Chassis, der Karosserie, der Kabine oder dem Rumpf fest verbunden ist.

In einer beispielhaften Ausführungsform des zweiten Aspekts ist bestimmt, dass
- das Eingabegerät ein erstes Verbindungselement aufweist, das an der Bodenwand oder Rückwand befestigt ist;
- das Eingabegerät mithilfe des ersten Verbindungselements mit dem Chassis, der Karosserie, der Kabine oder dem Rumpf fest verbunden ist.

Das Militärfahrzeug kann nach Bedarf auf beliebige Weise ausgebildet sein, beispielsweise als Lastkraftwagen, Panzer, Flugzeug, Hubschrauber, U-Boot, Boot oder Schiff und/oder derart, dass es kein zusätzliches oder wenigstens ein zusätzliches Eingabegerät aufweist. Der Rumpf kann beispielsweise ein Flugzeugrumpf, Hubschrauberrumpf, U-Bootsrumpf, Bootsrumpf oder Schiffsrumpf sein.

In einer beispielhaften Ausführungsform des zweiten Aspekts ist bestimmt, dass eine Traverse mithilfe eines zweiten Verbindungselements, das an dem ersten Verbindungselement kraftschlüssig und/oder formschlüssig angreift, einerseits an dem Gehäuse und anderseits an dem Chassis, der Karosserie, der Kabine oder dem Rumpf befestigt ist.

In einer beispielhaften Ausführungsform des zweiten Aspekts ist bestimmt, dass
- die Traverse einen nahen und einen fernen Endabschnitt aufweist und mit dem nahen Endabschnitt an dem Gehäuse befestigt ist;
- der ferne Endabschnitt einerseits über ein feststellbares Gelenk mit dem nahen Endabschnitt verbunden ist und anderseits an dem Chassis, der Karosserie, der Kabine oder dem Rumpf befestigt ist.

In einer beispielhaften Ausführungsform des zweiten Aspekts ist bestimmt, dass
- das Eingabegerät gemäß dem ersten Aspekt ausgebildet ist.

Wird im Rahmen der vorliegenden Offenbarung der Begriff "etwa" oder "ungefähr" oder "im Wesentlichen" im Zusammenhang mit Werten oder Wertebereichen oder aber mit Eigenschaften oder Geometrien verwendet, so ist darunter ein Toleranzbereich zu verstehen, den der Fachmann auf diesem Gebiet für üblich erachtet. Insbesondere beträgt im Zusammenhang mit Werten oder Wertebereichen bei Verwendung des Begriffs "etwa" oder "ungefähr" ein Toleranzbereich ±20 %, bevorzugt ±10 % und weiter bevorzugt ±5 %. Untergrenzen von Wertebereichen können somit um 5 % bis 20 % unterschritten werden. Obergrenzen von Wertebereichen können somit um 5 % bis 20 % überschritten werden. Soweit verschiedene Wertebereiche, beispielsweise bevorzugte und weiter bevorzugte Wertebereiche, in der vorliegenden Erfindung angegeben sind, sind die Untergrenzen und die Obergrenzen der verschiedenen Wertebereiche miteinander kombinierbar.

Im Folgenden werden Ausführungsformen der Erfindung beispielhaft anhand der beigefügten Zeichnungen näher erläutert. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden und/oder kombiniert werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen.

Die Zeichnungen zeigen in:
- FIG. 1: eine perspektivische Ansicht eines Arbeitsplatzes in einem Militärfahrzeug, der einen Sitz für einen Soldaten und eine bevorzugte Ausführungsform eines erfindungsgemäßen Eingabegeräts umfasst;
- FIG. 2: eine Ansicht von oben auf das Eingabegerät aus FIG. 1;
- FIG. 3: eine Ansicht von unten auf das Eingabegerät;
- FIG. 4: eine Ansicht von hinten auf das Eingabegerät; und
- FIG. 5: eine Seitenansicht einer bevorzugten Ausführungsform eines Militärfahrzeug, das mit dem Eingabegerät ausgerüstet ist.

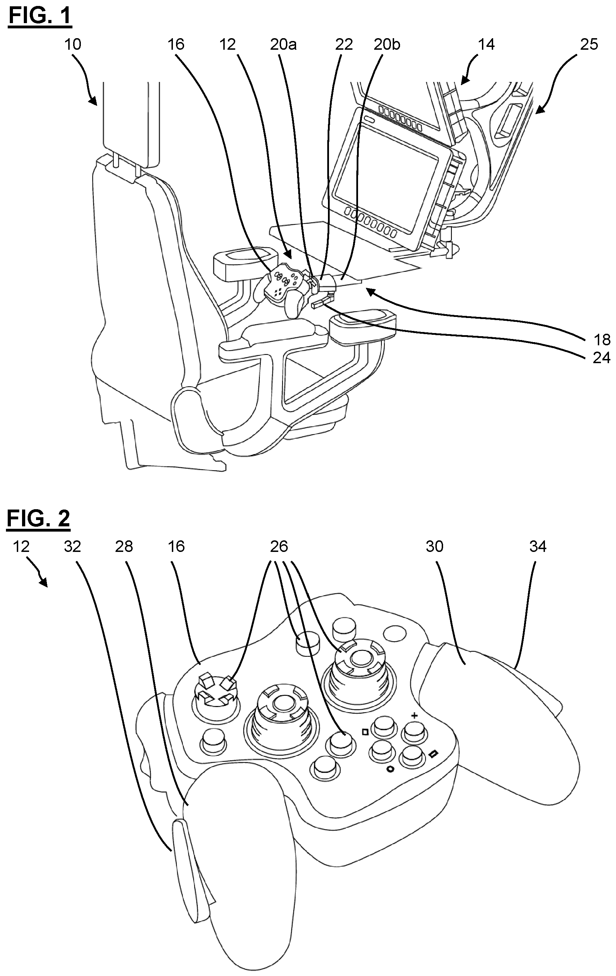

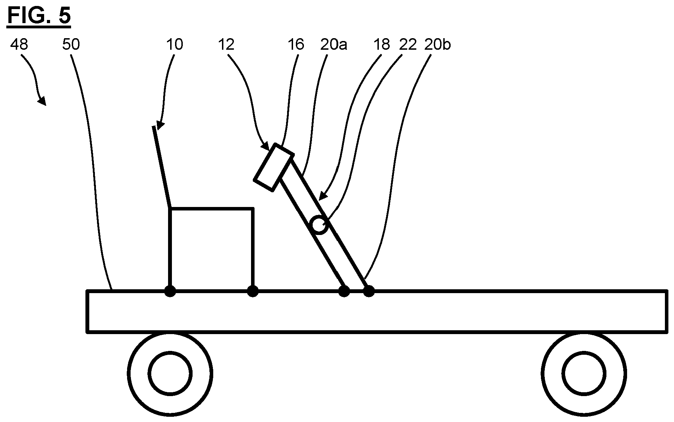

In FIG. 1 ist ein beispielhafter Arbeitsplatz für einen Soldaten in einem Militärfahrzeug 48 (FIG. 5) schematisch dargestellt. Vor einem Sitz 10 sind eine bevorzugte Ausführungsform eines erfindungsgemäßen Eingabegeräts 12 sowie zwei Monitore 14 angeordnet. Das Eingabegerät 12 weist ein Gehäuse 16, das beispielhaft aus Gussaluminium besteht, sowie eine Traverse 18 auf. Die Traverse 18 weist einen nahen Endabschnitt 20a auf, der an dem Gehäuse 16 befestigt ist, sowie einen fernen Endabschnitt 20b, der durch ein Gelenk 22 mit dem nahen Endabschnitt 20a verbunden ist. Der Endabschnitt 20b und die Monitore 14 sind an einem Tragarm 25 befestigt, der seinerseits an einem Chassis 50 (FIG. 5) des Militärfahrzeugs 48 befestigt ist. Das Gelenk 22 ist mithilfe eines Hebels 24 lösbar und feststellbar und ermöglicht im gelösten Zustand eine Längsverschiebung und eine Drehung des Endabschnitts 20a und somit des an ihm befestigten Gehäuses 16 relativ zu dem Endabschnitt 20b.

In FIG. 2 bis 4 ist das Eingabegerät 12 aus FIG. 1 ohne die Traverse 18 separat dargestellt. Es weist mehrere Befehlsgeber 26 auf, die an einer Oberseite des Gehäuses 16 angeordnet sind und beispielhaft mehrere Taster, zwei Joysticks und einen 4-Wege-Schalter umfassen. Das Eingabegerät 12 weist zudem einen ersten, in FIG. 2 linken Handgriff 28, der an einer ersten, in FIG. 2 linken Seitenwand des Gehäuses 16 befestigt ist, und einen zweiten, in FIG. 2 rechten Handgriff 30 auf, der an einer zweiten, der ersten Seitenwand gegenüberliegenden, in FIG. 2 rechten Seitenwand des Gehäuses 16 befestigt ist. Die Handgriffe 28, 30 sind so angeordnet, dass der Soldat sich an ihnen festhalten und abstützen und gleichzeitig die unterschiedlichen Befehlsgeber 26 betätigen kann. Die Handgriffe 28, 30 weisen eine Pulverbeschichtung zur Erhöhung der Rauigkeit ihrer Oberfläche auf.

Das Eingabegerät 12 weist beispielhaft einen ersten Totmannschalter 32, der an der Außenseite des ersten Handgriffs 28 angeordnet ist, und einen zweiten Totmannschalter 34 auf, der an der Außenseite des zweiten Handgriffs 30 angeordnet ist. Die Totmannschalter 32, 34 sind beispielhaft als Flächenschalter ausgebildet, die beim normalen Umgreifen der Handgriffe 28, 30 automatisch betätigt werden.

Das Eingabegerät 12 weist beispielhaft eine Versteifungsplatte 36, die an einer Bodenwand 38 des Gehäuses 16 befestigt ist, sowie vier erste Verbindungselemente 40 in Gestalt von vier ersten Schraubelementen 40, die an der Versteifungsplatte 36 befestigt sind, und vier zweite Verbindungselemente in Gestalt von vier zweiten Schraubelementen (nicht dargestellt) auf, die komplementär zu den Schraubelementen 40 ausgebildet und an dem nahen Endabschnitt 20a angeordnet sind. Die Versteifungsplatte 36 ist beispielhaft aus Stahl hergestellt und an der Bodenwand 38 geklebt. Die ersten Schraubelemente 40 sind beispielhaft als Gewindehülsen aus Stahl ausgebildet und an die Versteifungsplatte 36 geschweißt. Die zweiten Schraubelemente sind als Schrauben ausgebildet ist, die in Durchgangslöchern (nicht dargestellt) des Endabschnitts 20a sitzen und in die Schraubelemente 40 geschraubt sind.

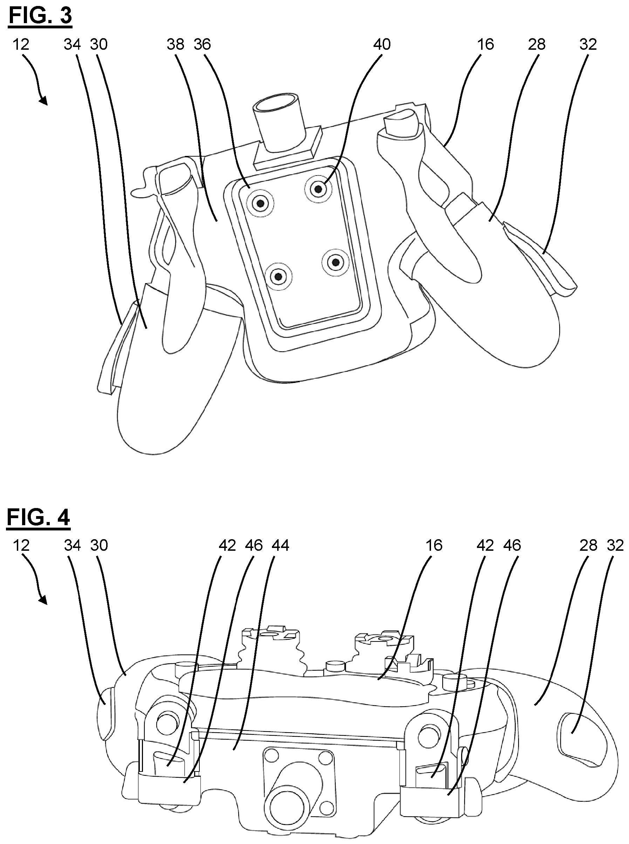

Das Eingabegerät 12 weist beispielhaft weitere Befehlsgeber in Gestalt von zwei Schusstasten 42 auf, mit denen Waffen (nicht dargestellt) abgefeuert werden können. Die Schusstasten 42 sind an einer Rückwand 44 des Gehäuses 16 so angeordnet, dass sie mit dem linken beziehungsweise rechten Zeigefinger betätigt werden können. Jeder Schusstaste 42 ist eine Klappe 46 zugeordnet, die beweglich an der Stirnwand 44 gelagert ist und eine Abdeckposition, die in FIG. 4 dargestellt ist, und eine Freigabeposition einnehmen kann. Jede Klappe 46 ist in die Abdeckposition vorgespannt, in der sie die jeweilige Schusstaste 42 so abdeckt, dass diese nicht betätigt werden kann.

In FIG. 5 ist eine bevorzugte Ausführungsform eine Militärfahrzeugs 48 schematisch dargestellt, das beispielhaft ein Lastkraftwagen ist. Dabei sind für die Erfindung unwesentliche Teile, wie beispielsweise eine Karosserie, der Antrieb, die Fahrerkabine und sonstige An- und Aufbauten nicht dargestellt. Das Militärfahrzeug 48 weist das Eingabegerät 12 sowie ein Chassis 50 auf. Auf dem Chassis 50 ist ein Sitz 10 und vor diesem eine Traverse 18 befestigt. Die Traverse 18 weist einen nahen und einen fernen Endabschnitt 20a, 20b auf und ist mit dem nahen Endabschnitt 20a mithilfe der ersten Schraubelemente 40 an dem Gehäuse 16 befestigt. Der ferne Endabschnitt 20b ist einerseits, nämlich an seinem in FIG. 5 oberen Ende über ein feststellbares Gelenk 22 mit dem nahen Endabschnitt 20a verbunden und anderseits, nämlich mit seinem in FIG. 5 unteren Ende an dem Chassis 50 befestigt.

### Bezugszeichenliste:

- 10: Sitz
- 12: Eingabegerät
- 14: Monitor
- 16: Gehäuse
- 18: Traverse
- 20a/b: naher/ferner Endabschnitt von 18
- 22: Gelenk
- 24: Hebel
- 25: Tragarm
- 26: Befehlsgeber
- 28: erster Handgriff
- 30: zweiter Handgriff
- 32: erster Totmannschalter
- 34: zweiter Totmannschalter
- 36: Versteifungsplatte
- 38: Bodenwand
- 40: erste Verbindungselemente bzw. Schraubelemente
- 42: Schusstaste
- 44: Rückwand
- 46: Klappe
- 48: Militärfahrzeug
- 50: Chassis

## Patentansprüche

1. Eingabegerät (12) nach Art eines Gamepads, insbesondere zur Nutzung in einem Militärfahrzeug, aufweisend:
- ein Gehäuse (16);
- mehrere Befehlsgeber, die an einer Oberseite des Gehäuses (16) angeordnet sind;
- einen ersten Handgriff (28), der an einer ersten Seitenwand des Gehäuses (16) befestigt ist;
- einen zweiten Handgriff (30), der an einer zweiten, der ersten Seitenwand gegenüberliegenden Seitenwand des Gehäuses (16) befestigt ist;
**dadurch gekennzeichnet, dass**
- ein erstes Verbindungselement (40) an einer Bodenwand (38) oder Rückwand (44) des Gehäuses (16) befestigt ist.

2. Eingabegerät (12) nach Anspruch 1, **dadurch gekennzeichnet, dass**
- das erste Verbindungselement ein erstes Schraubelement (40) ist und ein Außengewinde oder Innengewinde aufweist.

3. Eingabegerät (12) nach einem oder mehreren der vorherigen Ansprüche, **dadurch gekennzeichnet, dass**
- eine Versteifungsplatte (36) an der Bodenwand (38) oder Rückwand (44) befestigt oder in die Bodenwand (38) oder Rückwand (44) eingelassen ist;
- das erste Verbindungselement (40) an der Versteifungsplatte (36) befestigt ist.

4. Eingabegerät (12) nach einem oder mehreren der vorherigen Ansprüche, **dadurch gekennzeichnet, dass**
- eine Traverse (18) mithilfe eines zweiten Verbindungselements, das an dem ersten Verbindungselement (40) kraftschlüssig und/oder formschlüssig angreift, an dem Gehäuse (16) befestigt ist.

5. Eingabegerät (12) nach Anspruch 4, **dadurch gekennzeichnet, dass**
- die Traverse (18) einen nahen und einen fernen Endabschnitt (20a, 20b) aufweist und mit dem nahen Endabschnitt (20a) an dem Gehäuse (16) befestigt ist;
- der ferne Endabschnitt (20b) über ein feststellbares Gelenk (22) mit dem nahen Endabschnitt (20a) verbunden ist.

6. Eingabegerät (12) nach Anspruch 5, **dadurch gekennzeichnet, dass**
- das Gelenk (22) eine Längsverschiebung und/oder eine Drehung des nahen Endabschnitts (20a) und somit des an ihm befestigten Gehäuses (16) relativ zu dem fernen Endabschnitt (20b) ermöglicht.

7. Eingabegerät (12) nach einem oder mehreren der vorherigen Ansprüche, **dadurch gekennzeichnet, dass**
- ein erster Totmannschalter (32) an dem ersten Handgriff (28) und ein zweiter Totmannschalter (34) an dem zweiten Handgriff (30) angeordnet ist.

8. Eingabegerät (12) nach einem oder mehreren der vorherigen Ansprüche, **dadurch gekennzeichnet, dass**
- jeder Handgriff (28, 30) eine raue oder strukturierte Oberfläche aufweist.

9. Eingabegerät (12) nach Anspruch 8, **dadurch gekennzeichnet, dass**
- die raue oder strukturierte Oberfläche durch eine Pulverbeschichtung erzeugt wird.

10. Eingabegerät (12) nach einem oder mehreren der vorherigen Ansprüche, **dadurch gekennzeichnet, dass**
- einer der Befehlsgeber (26) eine Schusstaste (42) ist, mit der eine Waffe abgefeuert werden kann;
- eine Klappe (46) beweglich an dem Gehäuse (16) gelagert ist und eine Abdeckposition und eine Freigabeposition einnehmen kann;
- die Klappe (46) in die Abdeckposition vorgespannt ist, in der sie die Schusstaste (42) so abdeckt, dass diese nicht betätigt werden kann;
- die Klappe (46) in der Freigabeposition die Schusstaste (42) so freigibt, dass diese betätigt werden kann.

11. Militärfahrzeug (48), aufweisend:
- ein Eingabegerät (12), aufweisend:
- ein Gehäuse (16);
- mehrere Befehlsgeber, die an einer Oberseite des Gehäuses (16) angeordnet sind;
- einen ersten Handgriff (28), der an einer ersten Seitenwand des Gehäuses (16) befestigt ist;
- einen zweiten Handgriff (30), der an einer zweiten, der ersten Seitenwand gegenüberliegenden Seitenwand des Gehäuses (16) befestigt ist; und
- ein Chassis (50), eine Karosserie, eine Kabine oder einen Rumpf;
**dadurch gekennzeichnet, dass**
- das Eingabegerät (12) an seiner Bodenwand (38) oder Rückwand (44) durch Formschluss und/oder Kraftschluss und/oder Stoffschluss mit dem Chassis (50), der Karosserie, der Kabine oder dem Rumpf fest verbunden ist.

12. Militärfahrzeug (48) nach Anspruch 11, **dadurch gekennzeichnet, dass**
- das Eingabegerät (12) ein erstes Verbindungselement (40) aufweist, das an der Bodenwand (38) oder Rückwand (44) befestigt ist;
- das Eingabegerät (12) mithilfe des ersten Verbindungselements (40) mit dem Chassis (50), der Karosserie, der Kabine oder dem Rumpf fest verbunden ist.

13. Militärfahrzeug (48) nach Anspruch 12, **dadurch gekennzeichnet, dass**
- eine Traverse (18) mithilfe eines zweiten Verbindungselements, das an dem ersten Verbindungselement (40) kraftschlüssig und/oder formschlüssig angreift, einerseits an dem Gehäuse (16) und anderseits an dem Chassis (50), der Karosserie, der Kabine oder dem Rumpf befestigt ist.

14. Militärfahrzeug (48) nach Anspruch 13, **dadurch gekennzeichnet, dass**
- die Traverse (18) einen nahen und einen fernen Endabschnitt (20a, 20b) aufweist und mit dem nahen Endabschnitt (20a) an dem Gehäuse (16) befestigt ist;
- der ferne Endabschnitt (20b) einerseits über ein feststellbares Gelenk (22) mit dem nahen Endabschnitt (20a) verbunden ist und anderseits an dem Chassis (50), der Karosserie, der Kabine oder dem Rumpf befestigt ist.

15. Militärfahrzeug (48) nach einem oder mehreren der Ansprüche 11 bis 14, **dadurch gekennzeichnet, dass**
- das Eingabegerät (12) gemäß einem oder mehreren der Ansprüche 1 bis 10 ausgebildet ist.
